# EUROPÄISCHE PATENTSCHRIFT

(11) **EP 0 630 922 B1**
(45) Veröffentlichungstag und Bekanntmachung des Hinweises auf die Patenterteilung: **17.09.1997**
(21) Anmeldenummer: 94107596.2
(22) Anmeldetag: 17.05.1994
(51) Int. Cl.: C08G 18/40, C08G 18/62, C08G 18/08, C09D 175/04

(54) **Überzugsmittel und deren Verwendung als Grundierung und/oder Füller bei der Herstellung von Mehrschichtlackierungen**
Coating masses and their use as a primer and/or a putty for the preparation of multilayer coatings
Matières de revêtement et leur utilisation comme couche primaire et/ou mastic pour la préparation de revêtements à couches multiples

(30) Priorität: 20.05.1993 DE 4316912
(43) Veröffentlichungstag der Anmeldung: 28.12.1994
(73) Patentinhaber: Herberts Gesellschaft mit beschränkter Haftung, 42285 Wuppertal (DE)
(72) Erfinder: Becker, Heinz Dietholf, D-53121 Bonn (DE); Bremer, Gerhard, Dr., D-50226 Frechen (DE); Sadowski, Fritz, Dr., D-50259 Pulheim (DE); Stephan, Werner, D-42111 Wuppertal (DE)
(74) Vertreter: Türk, Gille, Hrabal, Leifert

(56) Entgegenhaltungen:
- EP-A- 0 269 035
- US-A- 3 919 173

## Beschreibung

Die Erfindung betrifft ein Überzugsmittel, das ein Bindemittelgemisch aus einer esterlöslichen Nitrocellulose, einem hydroxyfunktionellen Copolymerisat und einem Lackpolyisocyanat, Pigmente und/oder Füllstoffe, Lösungsmittel und gegebenenfalls lackübliche Hilfsstoffe enthält. Das erfindungsgemäße Überzugsmittel ist besonders geeignet zur Herstellung von Grundierungen sowie als Füller in Mehrschichtlackierungen, insbesondere auf dem Kraftfahrzeugsektor.

Überzugsmittel auf der Basis von Polyhydroxyacrylatharzen, Lackpolyisocyanaten und Nitrocellulose sind bereits bekannt. Bekannt ist auch ihre Verwendung als Grundierung oder Füller, insbesondere auf dem Kraftfahrzeugsektor. In EP-A-269 035 wird ein derartiges Überzugsmittel beschrieben, welches im Bindemittelgemisch 60 - 75 Gew.-% eines hydroxyfunktionellen Copolymerisates, erhalten durch Umsetzung von Styrol und/oder einem Styrolderivat mit einem Hydroxyalkylester der (Meth)acrylsäure und einem (Meth)acrylat, dessen Homopolymerisat eine Glasübergangstemperatur von größer 40°C aufweist, 1 - 5 Gew.-% esterlösliche Nitrocellulose und 25 - 35 Gew.-% Polyisocyanat enthält. Die daraus erhaltenen Überzugsmittel sind zur Ausbildung von hohen Schichtdicken bis 400 µm geeignet, haben jedoch den Nachteil, daß sie bei sehr niedrigen Temperaturen nicht mehr verarbeitet werden können. Desweiteren sind Topfzeit und Lösemittelgehalt dieser Überzugsmittel noch nicht zufriedenstellend.

In der DE-A-35 46 594 sind Copolymerisate beschrieben, welche erhältlich sind durch Umsetzung von 21 - 70 Gew.-% Styrol und/oder Vinyltoluol, 10 - 39 Gew.-% Hydroxyalkylester der (Meth)acrylsäure, 0 - 2 Gew.-% (Meth)acrylsäure und/oder Itaconsäure, 0 - 20 Gew.-% Alkylester der (Meth)acrylsäure und 0 - 38 Gew.-% Butylacrylat und/oder 2-Ethylhexylacrylat.

Diese Copolymerisate können zusammen mit Epoxidharzen und Nitrocellulose als Grundierung, Grundier- oder Spritzfüller verwendet werden. Nachteile dieser Überzugsmittel liegen im niedrigen Festkörpergehalt und damit relativ hohen Lösemittelgehalt.

Aufgabe der Erfindung ist die Bereitstellung von Überzugsmitteln, die insbesondere zur Herstellung von Grundierungen und als Füller geeignet sind, welche sich auch bei niedrigen Temperaturen problemlos verarbeiten lassen und welche eine ausreichende Topfzeit und einen relativ niedrigen Lösemittelgehalt aufweisen.

Die Aufgabe wird gelöst durch die Überzugsmittel, enthaltend ein Bindemittelgemisch aus einer esterlöslichen Nitrocellulose, einem Lackpolyisocyanat und einem hydroxyfunktionellen Copolymerisat, Pigmente und/oder Füllstoffe, Lösungsmittel und gegebenenfalls lackübliche Hilfsstoffe, welches dadurch gekennzeichnet ist, daß das Bindemittelgemisch im wesentlichen besteht aus
A) mindestens 60 Gew.-% eines hydroxyfunktionellen Copolymerisates mit einer OH-Zahl von 110 bis 170 mg KOH/g, erhältlich aus
   a) 5 - 60 Gew.-%, vorzugsweise 10 - 30 Gew.-% mindestens eines Diesters einer alpha,beta-olefinisch ungesättigten Dicarbonsäure mit gesättigten einwertigen Alkoholen mit 1 - 8 C-Atomen,
   b) 10 - 70 Gew.-%, vorzugsweise 35 - 60 Gew.-% eines oder mehrerer vinylaromatischer Kohlenwasserstoffe,
   c) 0 - 30 Gew.-%, vorzugsweise 0 - 15 Gew.-% eines oder mehrerer Glycidylester von in alpha-Stellung verzweigten aliphatischen gesättigten Monocarbonsäuren,
   d) 25 - 50 Gew.-% mindestens eines Hydroxyalkylesters oder eines Gemisches mindestens eines Alkylesters und eines Hydroxyalkylesters einer alpha,beta-olefinisch ungesättigten Monocarbonsäure,
   e) 0 - 10 Gew.-% einer oder mehrerer alpha,beta-ungesättigter Monocarbonsäuren,
B) 1 - 6 Gew.-% esterlöslicher Nitrocellulose,
C) 0,5 - 1,8 Gew.-% Calziumoxid,
D) 25 - 35 Gew.-% eines oder mehrerer zwei- und mehrwertiger Polyisocyanate.

Die Summe der Komponenten A), B), C) und D), sowie a), b), c), d) und e) beträgt jeweils 100 %.

Es hat sich gezeigt, daß mit den erfindungsgemäßen Überzugsmitteln Grundierungen und Füller bereitgestellt werden, die im spritzfertigen Zustand einen hohen Festkörpergehalt aufweisen und auch bei niedrigen Temperaturen extrem schnell trocknen. Überraschend war, daß auch bei höheren Schichtdicken bis 250 µm keine Kocherneigung festzustellen ist, obwohl ein Bindemittel mit einer verhältnismäßig hohen Hydroxylzahl eingesetzt wird.

Die Herstellung des in den erfindungsgemäßen Überzugsmitteln eingesetzten Copolymerisats (Komponente A) kann durch Polymerisation nach üblichen Verfahren, z.B. der Substanz-, Lösungs- oder Perlpolymerisation durchgeführt werden. Die verschiedenen Polymerisationsverfahren sind gut bekannt und beschrieben in: Houben-Weyl, Methoden der Organischen Chemie, 4. Aufl., Band 14/1, Seiten 24 - 255 (1961).

Bevorzugt wird das hydroxylgruppenhaltige Copolymerisat in einer radikalischen Substanzpolymerisation hergestellt. Derartige Copolymerisate und ihre Herstellung werden in der DE-A-31 01 887 beschrieben. Dabei kommen übliche radikalbildende Verbindungen als Polymerisationsinitiatoren in Frage.

Derartige Initiatoren sind z.B. aliphatische Azoverbindungen wie Azoisobuttersäurenitril und Peroxide, wie Diacylperoxide, z.B. Di-benzoylperoxid, Dialkylperoxide, wie Di-tert.-butylperoxid oder Dialkylhydroperoxide, wie tert.-Butylhydroperoxid. Besonders bevorzugt ist Di-tert.-butylperoxid.

Deren Anteil beträgt im allgemeinen 0,5 bis 2,5, vorzugsweise 0,5 bis 1,9 Gew.-%, bezogen auf das Gesamtgewicht der Ausgangskomponenten.

Der Initiator kann zusammen mit den Monomeren allmählich zugegeben werden. Ein Teil des Initiators kann auch gleich am Anfang mit der Komponente A) und ein anderer Teil mit den allmählich zugegebenen weiteren Monomeren in den Reaktor eingegeben werden. Nachdem die gesamten Monomeren eingebracht worden sind, ist in der Regel keine zusätzliche Initiatorzugabe erforderlich, um die Polymerisation zu Ende zu führen. In einigen Fällen ist es jedoch auch möglich, eine zusätzliche Menge von 0,1 bis 1,0 Gew.-% Initiator in Intervallen zuzugeben, nachdem die Monomerzufuhr abgeschlossen ist, jedoch soll auch in einem solchen Fall die Höchstmenge des Initiators 2,5 Gew.-% betragen.

Die Polymerisationstemperatur hängt von dem jeweils gewünschten Molekulargewicht ab und liegt im allgemeinen wesentlich über dem Schmelzpunkt des resultierenden Copolymerisats, vorzugsweise zwischen 150 und 190°C, insbesondere zwischen 160 und 185°C. Bei der Polymerisationstemperatur ist das Copolymerisat also flüssig und läßt sich leicht rühren. Nach der Polymerisation kann es gegebenenfalls verdünnt oder ohne Lösungsmittel abgekühlt werden, wobei es zu einer festen Masse erstarrt und zerkleinert werden kann.

Geeignete Komponenten a) sind Malein- und Fumarsäureester, vorzugsweise mit gesättigten einwertigen Alkoholen mit 1 bis 8, vorzugsweise 1 bis 4 C-Atomen im Molekül, wie Dimethylmaleinat, Diethylfumarat, Di-butylmaleinat und Dibutylfumarat.

Als Komponente b) ist beispielsweise Styrol, Alkylstyrol, z.B. alpha-Methylstyrol oder ein Vinyltoluol geeignet, und zwar jeweils einzeln oder im Gemisch.

Die Komponente c) umfaßt beispielsweise Glycidylester von alpha-Monoalkyl- und/oder alpha,alpha-Dialkylalkanmonocarbonsäuren mit 12 bis 14 C-Atomen.

Als Komponente d) geeignete Hydroxyalkylester sind z.B. die Hydroxyalkylester der Acryl-, Methacryl- und Crotonsäure, vorzugsweise mit 1 - 12 C-Atomen im Hydroxyalkylrest. Beispiele für bevorzugte Hydroxyalkylester sind Hydroxymethylmethacrylat, Hydroxyethylmethacrylat, Hydroxymethylacrylat, Butandiol-1,3-monoacrylat, Butandiol-1,4-monomethacrylat, Butandiol-1,2-monoacrylat, Butandiol-1,2-monomethacrylat.

Als Komponente d) geeignete Alkylester sind z.B. die Alkylester der Acryl-, Methacryl- und Crotonsäure mit einwertigen Alkoholen, vorzugsweise solchen mit 1 - 12 C-Atomen, wie Methanol, Ethanol, den verschiedenen Butanolen. Gut geeignet sind dabei Methylmethacrylat, Ethylmethacrylat, tert.-Butylacrylat, tert.-Butylmethacrylat.

Die Mengenanteile der Hydroxyalkylester und der Alkylester der Komponente d) werden so abgestimmt, daß die gewünschte OH-Zahl erzielt wird.

Als Komponente e) sind bevorzugt geeignet Acrylsäure, Methacrylsäure und Crotonsäure.

Die in dem erfindungsgemäßen Überzugsmittel als Komponente B) verwendete Nitrocellulose (Cellulosenitrat) soll in organischen Ester-Lösungsmitteln löslich sein. Hierzu ist beispielsweise Nitrocellulose mit einem Stickstoffgehalt von 10 bis 15 %, z.B. von 11,8 bis 12,25 % geeignet. Eine solche Nitrocellulose ist in Estern löslich; in Alkoholen praktisch unlöslich. Es besteht jedoch weitgehend Verschnittfähigkeit mit Alkoholen und Aromaten. Ester-Lösungsmittel in denen die erfindungsgemäß einsetzbare Nitrocellulose löslich ist, sind z.B. solche Ester, wie sie auch später in den fertigen Überzugsmitteln enthalten sind.

Es ist günstig und bevorzugt, wenn die Eigenviskosität der Nitrocellulose ausgedrückt durch den K-Wert nach H. Fikentscher (Cellulosechemie 13, Seite 58 (1932)) im Bereich von 300 bis 600 (Messung: 2 Gramm Nitrocellulose in 100 ml Aceton bei 25°C), liegt.

Bevorzugt eingesetzt wird Nitrocellulose mit einem K-Wert von 400, z.B. Collodiumwolle ^{R} E 400 B (Wolff Walsrode AG).

Als Komponente C) ist im erfindungsgemäßen Überzugsmittel Calziumoxid in einer Menge von 0,5 - 1,8 Gew.-%, bezogen auf den Gesamtfestkörpergehalt des Überzugsmittels, enthalten. Es handelt sich um pulverförmiges Calziumoxid (CaO). Beispielsweise sind handelsübliche feinkörnige Pulver geeignet.

Für die Vernetzung der erfindungsgemäßen Bindemittelmischung aus Copolymerisat und esterlöslicher Nitrocellulose werden Polyisocyanate (Komponente D) eingesetzt. Es handelt sich hierbei um lacktypische Polyisocyanate. Der Anteil an Polyisocyanat-Vernetzer wird so gewählt, daß auf eine Hydroxyl-Gruppe der Bindemittelmischung 0,5 bis 2 Isocyanat-Gruppen entfallen. Überschüssige Isocyanat-Gruppen können durch Feuchtigkeit abreagieren und zur Vernetzung beitragen.

Im Folgenden sind einige Beispiele für geeignete Polyisocyanate aufgeführt: aliphatische, cycloaliphatische und aromatische Polyisocyanate, wie Hexamethylendiisocyanat, Trimethylhexamethylendiisocyanat, Isophorondiisocyanat, 4,4'-Diisocyanato-dicyclohexylmethan, Toluylen-2,4-Diisocyanat, o-,m- und p-Xylylendiisocyanat, 4,4'-Diisocyanatodiphenylmethan; mit CH-, NH- oder OH-aciden Verbindungen verkappte Polyisocyanate; Biuret-, Allophanat-, Urethan-, oder Isocyanurat-Gruppen enthaltende Polyisocyanate.

Beispiele für derartige Polyisocyanate sind ein Biuretgruppen enthaltendes Umsetzungsprodukt aus 3 Molen Hexamethylendiisocyanat und ein Mol Wasser, ein Isocyanuratgruppen enthaltendes Polyisocyanat, das durch Trimerisierung von 3 Molen Hexamethylendiisocyanat hergestellt wird oder Urethangruppen enthaltende Polyisocyanate, welche Reaktionsprodukte darstellen aus 3 Molen Toluylendiisocyanat und 1 Mol Trimethylolpropan.

Zur Herstellung der erfindungsgemäßen Überzugsmittel werden die Einzelbestandteile miteinander vermischt und in üblicher Weise homogenisiert bzw. vermahlen. Beispielsweise kann so vorgegangen werden, daß zunächst das hydroxyfunktionelle Copolymerisat (Komponente A) mit dem Calziumoxid (C), Pigmenten und/oder Füllstoffen sowie gegebenenfalls vorhandenen lacküblichen Hilfsstoffen und Lösungsmitteln vermischt wird, eine Dispersion gebildet wird und anschließend die Nitrocellulose (Komponente B) in Form einer Lösung zugesetzt wird, worauf sich ein Mahlgang anschließt. Dann kann die Zugabe des Polyisocyanats (Komponente D) erfolgen. Es ist auch möglich, das Polyisocyanat (Komponente D) getrennt in Form einer Lösung zu lagern und erst unmittelbar vor dem Gebrauch des Überzugsmittels zu den übrigen vorgemischten Bestandteilen zu fügen.

Als Lösungsmittel für die erfindungsgemäßen Überzugsmittel eignen sich beispielsweise:
- Glykolether,: wie Ethylenglykoldimethylether,
- Glykoletherester,: wie Ethylglykolacetat, Butylglykolacetat, 3-Methoxy-n-butylacetat, Butyldiglykolacetat, Methoxypropylacetat,
- Ester,: wie Butylacetat, Isobutylacetat, Amylacetat,
- Ketone,: wie Methylethylketon, Methylisobutylketon, Diisobutylketon, Cyclohexanon, Isophoron.

Es können auch aromatische Kohlenwasserstoffe, wie Xylol, Solvesso 100 (eingetragenes Warenzeichen) und aliphatische Kohlenwasserstoffe, gegebenenfalls im Verschnitt mit den oben genannten Lösungsmitteln, eingesetzt werden.

Die Menge des verwendeten Lösungsmittels hängt von der gewünschten Viskosität des fertiggestellten Überzugsmittels ab.

Den erfindungsgemäßen Überzugsmitteln können übliche Pigmente zugesetzt werden. Es können übliche anorganische und/oder organische Pigmente eingesetzt werden. Diese Pigmente können als Farbpigmente oder auch als Korrosionsschutzpigmente dienen. Beispiele für verwendbare Farbpigmente sind Eisenoxidpigmente und Titandioxid. Ein Beispiel für ein Korrosionsschutzpigment ist Zinkphosphat.

Die erfindungsgemäßen Überzugsmittel können auch Füllstoffe enthalten. Es handelt sich hierbei um übliche Füllstoffe, wie sie für Überzugsmittel verwendet werden und die sich beispielsweise auf das Haftvermögen, die Elastizität, die Trocknung, die Schleifbarkeit und die Filmhärte von aus den Überzugsmitteln hergestellten Überzügen auswirken.

Beispiele für derartige Füllstoffe sind Kieselsäure bzw. Siliziumoxid (beispielsweise zur Verbesserung der Adhäsion, der Filmhärte, der Lösungsmittelabgabe und zur Beeinflussung der Schleifbarkeit), Aluminiumsilikat (beispielsweise zur Verbesserung der Schleifbarkeit), Magnesiumsilikat (beispielsweise zur Erhöhung der Haftfestigkeit) und Bariumsulfat (beispielsweise zur Verbesserung der Filmhärte).

Das Verhältnis Füllstoffe und/oder Pigmente zu Bindemittel (Komponenten A, B, C und D) (fest auf fest; Gewichtsanteile) beträgt bevorzugt 70 bis 80 zu 30 bis 20. Den erfindungsgemäßen Überzugsmitteln können auch übliche Hilfsstoffe zugesetzt werden, wie sie in der Lacktechnik verwendet werden. Beispiele hierfür sind Thixotropiermittel, wie Montmorillonit oder pyrogenes Siliziumdioxid. Weitere Beispiele sind organische Metallsalze, wie Dibutylzinndilaurat und Zinknaphthenat. Derartige Katalysatoren fördern die Durchtrocknung, was zu einer rascheren Schleifbarkeit der erhaltenen Überzüge führt. Weitere Beispiele für lackübliche Hilfsstoffe sind Netzmittel, wie ionische und nicht-ionische Netzmittel, Korrosionsschutzmittel usw.

Die erfindungsgemäßen Überzugsmittel sind zur Ausbildung von Überzügen auf verschiedensten Substraten geeignet. Derartige Substrate sind beispielsweise Metall, Holz, Keramik und Kunststoff. Sie eignen sich insbesondere in der Kraftfahrzeugindustrie sowie in anderen Industriebereichen für Überzugszwecke in Serie, sowie im Reparaturbereich. Sie sind besonders geeignet für die Reparatur von Lackschäden an Kraftfahrzeugen, insbesondere Personenkraftwagen.

Sie können auf das Substrat als solches oder auf übliche Grundierungen aufgebracht werden. Sie sind besonders geeignet als Füller. In der Praxis werden sie insbesondere als 2-Komponenten-Materialien eingesetzt. Das heißt, den Komponenten A), B) und C) mit gegebenenfalls Zusätzen wird unmittelbar vor dem Gebrauch Komponente D) zugemischt. Eine Verdünnungszugabe ist bei Bedarf möglich, jedoch nicht erforderlich.

Die erfindungsgemäßen Überzugsmittel können auf verschiedene Weise aufgetragen werden, z.B. durch Spritzen (wie Druckluftspritzen), Pinsel- und Spachtelauftrag.

Aus den erfindungsgemäßen Überzugsmitteln hergestellte Überzüge sind selbst bei niedrigen Temperaturen bis 8°C schnell trocknend und besonders gut naß und trocken schleifbar. Sie zeigen sehr guten Verlauf ohne Blasenbildung auch bei höheren Schichtdicken. Die Topfzeit beträgt bis zu 90 Minuten.

Durch die vorliegende Erfindung wird somit ein Überzugsmittel bereitgestellt, das einen hohen Festkörpergehalt bzw. einen relativ niedrigen Lösemittelgehalt im spritzfertigen Zustand aufweist. Es ist daher besonders umweltfreundlich und extrem füllstark. Aufgrund der geringen Kocherneigung ist es auch in dickeren Schichten leicht trocknend und durchhärtbar. Es haftet auf den verschiedensten Untergründen, wie z.B. blankes Stahlblech, geschliffen, Polyvinylbutyralprimer, 2K-Epoxid-Grundierungen, angeschliffene Werks- oder Altlackierungen (mit Ausnahme thermoplastischer Lackierungen), und ist daher besonders gut im Kraftfahrzeugreparaturbereich einsetzbar. Beispielsweise können Spachtelflecken aus Polyethylen mit dem erfindungsgemäßen Überzugsmittel abgedeckt und nach dem Trocknen und Schleifen mit üblichen Decklacken, z.B. auf 2K-Acrylat/Isocyanat-Basis, überlackiert werden. Beim Überlackieren zeigt es generell einen sehr guten Lackstand. Es ist daher besonders als Spachtelmasse und Füllermasse geeignet.

Die Erfindung soll an Hand des nachfolgenden Beispiels näher erläutert werden.

### Herstellung der Komponente A)

Es wird ein hydroxylgruppenhaltiges Copolymerisat gemäß DE 31 01 887 Beispiel I/4 hergestellt.

### Herstellung eines Füllers

Im folgenden wird ein Beispiel für ein erfindungsgemäßes Überzugsmittel beschrieben, das als 2K-Füller Anwendung findet.

| Rezeptur Stammkomponente (Gew.-%): | |
|---|---|
| 18 % | hydroxylgruppenhaltiges Copolymerisat gemäß DE 31 01 887, Beispiel I/4, 70 %ig in Butylacetat (Komponente A) |
| 10 % | Butylacetat 98/100 |
| 5 % | Methoxybutylacetat |
| 5 % | Solvesso 100 |
| 0,5 % | elektroneutrales Netzmittel |
| 0,3 % | Montmorillonit |
| 1 % | pyrogene Kieselsäure |
| 0,3 % | Eisenoxidschwarz |
| 1,3 % | Eisenoxidgelb |
| 0,1 % | Eisenoxidrot |
| 1,2 % | Siliziumdioxid |
| 5,5 % | Magnesiumsilikat |
| 6,5 % | Zinkphosphat |
| 14 % | Titandioxid |
| 13 % | Aluminiumsilikat |
| 13 % | Bariumsulfat |
| 0,3 % | Zinknaphthenat |
| 0,8 % | Dibutylzinndilaurat (DBTL) |
| 0,2 % | Calziumoxid (Komponente C) |
| 4 % | handelsübliche Nitrocellulose (Komponente B) |

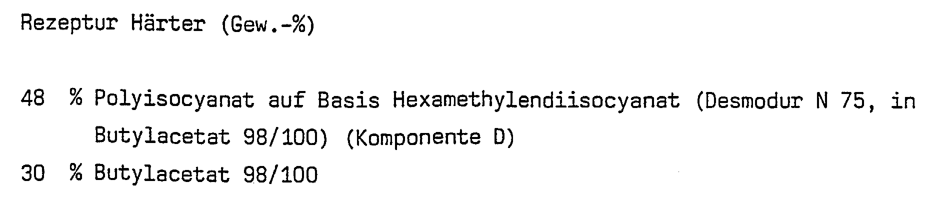

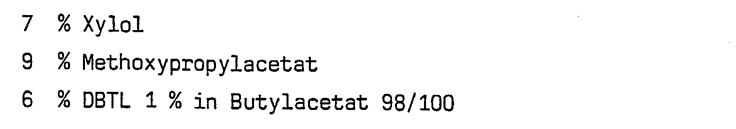

Bei der Herstellung der Stammkomponente wird wie folgt vorgegangen:

In einem mit Butylacetat gereinigten trockenen Behälter werden Komponente A), Lösemittel und Netzmittel vorgelegt und verrührt. Montmorillonit wird unter Rühren zugesetzt und bei 35 - 40°C mit einer üblichen Dispergiervorrichtung dispergiert. Anschließend werden die übrigen Komponenten mit Ausnahme der Komponente B) unter Rühren eingestreut und bei 40 - 50°C dispergiert. Nach Zusatz der Nitrocelluloselösung läßt man 12 Stunden quellen. Danach wird auf eine Kornfeinheit von 25 - 30 µm vermahlen.

Entsprechend der Rezeptur wird der Härter bereitet. Stammkomponente und Härter werden im Volumenverhältnis 4 : 1 miteinander vermischt.

Das so erhaltene Überzugsmittel wird in einer Schichtdicke von 100 µm und 250 µm durch Spritzauftrag auf ein Eisenblech aufgebracht. Bei Lufttrocknung werden in beiden Fällen kocherfreie Überzüge erhalten.

## Patentansprüche

1. Überzugsmittel, enthaltend ein Bindemittelgemisch aus einer esterlöslichen Nitrocellulose, einem Polyisocyanat und einem hydroxyfunktionellen Copolymerisat, Pigmente und/oder Füllstoffe, Lösungsmittel und gegebenenfalls lackübliche Hilfsstoffe, dadurch gekennzeichnet, daß das Bindemittel im wesentlichen besteht aus
A) mindestens 60 Gew.-% eines hydroxyfunktionellen Copolymerisates mit einer OH-Zahl von 110 bis 170 mg KOH/g, erhältlich aus
a) 5 - 60 Gew.-%, vorzugsweise 10 - 30 Gew.-% mindestens eines Diesters einer alpha,beta-olefinisch ungesättigten Dicarbonsäure mit gesättigten einwertigen Alkoholen mit 1 - 8 C-Atomen,
b) 10 - 70 Gew.-%, vorzugsweise 35 - 60 Gew.-% eines oder mehrerer vinylaromatischer Kohlenwasserstoffe,
c) 0 - 30 Gew.-%, vorzugsweise 0 - 15 Gew.-% eines oder mehrerer Glycidylester von in alpha-Stellung verzweigten aliphatischen gesättigten Monocarbonsäuren,
d) 25 - 50 Gew.-% mindestens eines Hydroxyalkylesters oder eines Gemisches mindestens eines Alkylesters und eines Hydroxyalkylesters einer alpha,beta-olefinisch ungesättigten Monocarbonsäure,
e) 0 - 10 Gew.-% einer oder mehrerer alpha,beta-ungesättigter Monocarbonsäuren,
B) 1 - 6 Gew.-% esterlöslicher Nitrocellulose,
C) 0,5 - 1,8 Gew.-% Calziumoxid,
D) 25 - 35 Gew.-% eines oder mehrerer zwei- und mehrwertiger Polyisocyanate.
wobei sich die Summe der Komponenten A), B), C) und D), sowie a), b), c), d) und e) jeweils auf 100 Gew.-% addiert.

2. Verfahren zur Herstellung von Mehrschichtlackierungen durch Auftrag mehrerer Überzugsmittelschichten auf einem zu lackierenden Substrat, dadurch gekennzeichnet, daß man eine Grundierungsschicht und/oder Füllerschicht unter Verwendung eines Überzugsmittels nach Anspruch 1 erstellt.

3. Verwendung der Überzugsmittel nach Anspruch 1 als Grundierungsmittel oder Füllermassen bei der Herstellung von Mehrschichtlackierungen.

4. Verwendung nach Anspruch 3 bei der Herstellung von Mehrschichtlackierungen auf dem Kraftfahrzeugsektor.

5. Mehrschichtlackierung, dadurch gekennzeichnet, daß sie als Grundierungsschicht und/oder Füllerschicht eine solche auf der Basis eines Überzugsmittels nach Anspruch 1 enthält.

## Claims

1. A coating medium containing a binder vehicle mixture comprising an ester-soluble nitrocellulose, a polyisocyanate and a hydroxy-functional copolymer, pigments and/or extenders, and optionally customary lacquer adjuvant substances, characterised in that the binder vehicle substantially consists of
A) at least 60 % by weight of a hydroxy-functional copolymer with an OH number of 110 to 170 mg KOH/g, obtainable from
a) 5 - 60 % by weight, preferably 10 - 30 % by weight, of at least one diester of an alpha,beta-olefinically unsaturated dicarboxylic acid with saturated monohydric alcohols containing 1 - 8 C atoms,
b) 10 - 70 % by weight, preferably 35 - 60 % by weight, of one or more aromatic vinyl hydrocarbons,
c) 0 - 30 % by weight, preferably 0 - 15 % by weight, of one or more glycidyl esters of aliphatic, saturated monocarboxylic acids which are branched in the alpha position,
d) 25 - 50 % by weight of at least one hydroxyalkyl ester or of a mixture of at least one alkyl ester and one hydroxyalkyl ester of an alpha,beta- olefinically unsaturated monocarboxylic acid,
e) 0 - 10 % by weight of one or more alpha,beta-unsaturated monocarboxylic acids,
B) 1 - 6 % by weight of ester-soluble nitrocellulose,
C) 0.5 - 1.8 % by weight of calcium oxide,
D) 25 - 35 % by weight of one or more di- and polyvalent polyisocyanates,
wherein the sum of components A), B), C) and D), and of a), b), c), d) and e) adds up to 100 % by weight in each case.

2. A process for producing multi-layer coatings by the application of a plurality of coating medium layers to a substrate to be coated, characterised in that a primer coat or primer surfacer coat is produced using a coating medium according to claim 1.

3. The use of the coating media according to claim 1 as primer media or primer surfacer compositions for the production of multi-layer coatings.

4. A use according to claim 3 for the production of multi-layer coatings in the motor vehicle sector.

5. A multi-layer coating, characterised in that it contains, as a primer coat and/or primer surfacer coat, a coat based on a coating medium according to claim 1.

## Revendications

1. Produit de revêtement contenant un liant mélangé qui consiste essentiellement en
A) au moins 60 % en poids d'un copolymère à fonctions hydroxy, ayant un indice d'OH de 110 à 170 mg de KOH/g, lui-même obtenu à partir de
a) 5 à 60 % en poids, de préférence 10 à 30 % en poids d'au moins un diester d'un acide dicarboxylique à insaturation alpha, bêta-oléfinique et d'alcools monovalents saturés en C1-C8,
b) 10 à 70 % en poids, de préférence 35 à 60 % en poids d'un ou plusieurs hydrocarbures vinylaromatiques,
c) 0 à 30 % en poids, de préférence 0 à 15 % en poids d'un ou plusieurs esters glycidyliques d'acides monocarboxyliques aliphatiques saturés ramifiés en position alpha,
d) 25 à 50 % en poids d'au moins un ester hydroxyalkylique ou d'un mélange d'au moins un ester alkylique et un ester hydroxyalkylique d'un acide monocarboxylique à insaturation alpha, bêta-oléfinique,
e) 0 à 10 % en poids d'un ou plusieurs acides monocarboxyliques alpha, bêta- insaturés,
B) 1 à 6 % en poids d'une nitrocellulose soluble dans les esters,
C) 0,5 à 1,8 % en poids d'oxyde de calcium,
D) 25 à 35 % en poids d'un ou plusieurs polyisocyanates di- et poly-valents,
la somme des composants A), B), C) et D), de même que la somme des composants a), b), c), d) et e), représentant 100 %.

2. Procédé pour l'application de revêtements à plusieurs couches sur un substrat, caractérisé en ce que l'on'applique une couche d'apprêt et/ou une couche de mastic à l'aide d'un produit de revêtement selon revendication 1.

3. Utilisation du produit de revêtement selon revendication 1 pour l'application de couches d'apprêt ou de mastic à l'application de revêtements à plusieurs couches.

4. Utilisation du produit de revêtement selon revendication 3 à l'application de revêtements à plusieurs couches dans l'industrie automobile.

5. Revêtement à plusieurs couches, caractérisé en ce qu'une couche d'apprêt et/ou une couche de mastic ont été appliquées à l'aide d'un produit de revêtement selon revendication 1.
